# EUROPÄISCHE PATENTSCHRIFT

(11) **EP 0 801 977 B1**
(45) Veröffentlichungstag und Bekanntmachung des Hinweises auf die Patenterteilung: **20.02.2002**
(21) Anmeldenummer: 97105594.2
(22) Anmeldetag: 04.04.1997
(51) Int. Cl.: B01J 19/18, B01F 13/08, G01N 21/03

(54) **Chemischer Reaktor mit Magnetrührwerk**
Chemical reactor with magnetic stirrer
Réacteur chimique avec agitateur magnétique

(30) Priorität: 17.04.1996 DE 19615117
(43) Veröffentlichungstag der Anmeldung: 22.10.1997
(73) Patentinhaber: BAYER AG, 51368 Leverkusen (DE)
(72) Erfinder: Braden, Christoph, Dr., 50937 Köln (DE); Dohrn, Ralf, Dr., 51467 Bergisch Gladbach (DE)

(56) Entgegenhaltungen:
- DE-A- 2 302 448
- FR-A- 2 586 940
- PATENT ABSTRACTS OF JAPAN vol. 013, no. 515 (C-655), 17.November 1989 & JP 01 207122 A (NORDSON KK), 21.August 1989,

## Beschreibung

Die Erfindung geht aus von einem Reaktor für chemische Reaktionen, insbesondere bei Betriebsdrücken > 5 bar, der aus einem zylindrischen Gefäß mit einem Rührwerk besteht.

Der Inhalt von chemischen Reaktoren kann mit Rührern durchmischt werden, bei denen der Antrieb des Rührwerkes außerhalb des Reaktorbehälters angebracht wird. Die Übertragung des Drehmomentes vom Motor auf den Rührer geschieht mit Hilfe einer Welle, die durch die Behälterwand geführt wird. Die Welle kann mit einer Stopfbuchse abgedichtet sein. Durch die Stopfbuchse ergeben sich Dichtigkeitsprobleme, so daß bei Drücken > 5 MPa häufig sogenannte stopfbuchslose Rührwerke (magnetisch-gekoppelte Motorrührer) angewendet werden. Dabei wird die Rührwerkswelle von einem einseitig geschlossenen Rohr umgeben. Das offene Rohrende wird mit dem Hochdruckreaktor verbunden. An dem Teil der Rührwelle, der sich im Rohr außerhalb des Reaktors befindet, sind Permantmagneten angebracht. Ein zylindrisches Teil wird um das Rohr drehbar befestigt, auf deren Innenseite ebenfalls Magnete angebracht sind. Ein Motor treibt das zylindrische Teil an. Die Drehmomentübertragung erfolgt über die Magneten durch das Rohr auf die Rührerwelle. Der Raum zwischen Rohr und Rührerwelle wird mit dem im Hochdruckreaktor befindlichen Medium ausgefüllt. Er stellt einen Totraum dar, in dem es zu Ablagerungen, Nebenreaktionen und ungewollten Phasenübergängen (z. B. Kondensationen) kommen kann. Durch diesen Totraum wird eine einheitliche Thermostatisierung des Inhaltes des Hochdruckreaktors erschwert.

Eine andere Möglichkeit, den Inhalt eines Reaktors zu vermischen, besteht in der Verwendung eines motorlosen magnetisch-gekoppelten Rührers an der Stirnseite eines zylindrischen Reaktors (vgl. US-Patent 4,199,265). Ein Stabmagnet dient als Rührfisch, der ungelagert im Reaktor rotiert, wobei ein drehendes Magnetfeld durch mehrere an der Stirnseite außerhalb des Reaktors angebrachten Elektromagnete erzeugt wird. Ein Nachteil bei der Verwendung eines solchen Rührers in einem Hochdruckreaktor mit Sichtfenster ist die Tatsache, daß eine Stirnseite des Behälters belegt wird und für ein den gesamten Querschnitt des Reaktors überdeckendes Sichtfenster nicht mehr zur Verfügung steht. Dabei ist zu berücksichtigen, daß die zweite Stirnseite in der Regel für einen Faltenbalg oder für ein zweites Sichtfenster (z.B. zur Einstrahlung Licht) benötigt wird. Ein weiterer Nachteil ist die Tatsache, daß der als Rührer dienende Stabmagnet nicht gelagert ist. Dadurch kann der Stabmagnet in eine Position geraten, in der er durch das drehende Magnetfeld nicht mehr erfaßt wird. Außerdem versperrt der Stabmagnet die freie Durchsicht durch die Längsachse des Reaktors, was beim Beobachten von Phasenübergängen und kritischen Punkten eine erhebliche Einschränkung darstellt.

Der Erfindung liegt die Aufgabe zu Grunde einen Reaktor für chemische Reaktionen mit folgenden Eigenschaften zu entwickeln:
1. Der Zellinnenraum des Reaktors soll durch mindestens ein optisches Sichtfenster vollständig einsehbar sein, um Phasenwechsel und kritische Punkte bei laufender Reaktion beobachten zu können. Dabei muß der Rührer so gestaltet sein, daß zumindest im zeitlichen Mittel jeder Ort in der Zelle beobachtet werden kann.
2. Für den gesamten Innenraum ist eine gute Durchmischung erforderlich.
3. Es dürfen keine Toträume vorhanden sein, in denen es zu Ablagerungen oder Kondensationen kommen kann.

Ein motorgetriebenes Rührwerk hat zwangsweise Toträume. Ein stirnseitiges motorloses Rührwerk entfällt wegen des Belegens einer Stirnseite, die für das Sichtfenster benötigt wird. Ein nicht-gelagerter Rührfisch kann sich festsetzen und versperrt die Längsachse der Zelle. Aus diesen Gründen besteht in der chemischen Industrie ein Bedarf für einen verbesserten Hochdruckreaktor mit einem magnetischen Rührer, der die obengenannten Anforderungen erfüllt.

Diese Aufgabe wird erfindungsgemäß dadurch gelöst, daß das Rührwerk aus einem magnetischen Rührer mit sternförmig außen um das zylindrische Reaktorgefäß herum angeordneten, ein Drehfeld erzeugenden Magnetspulen und einem im Bereich des Drehfeldes im Behälter um die Zylinderachse drehbar gelagerten, mit Rührschaufeln versehenen Rotor besteht, der mit dem Drehfeld zusammenwirkende Permanentmagnete trägt.

Dabei besteht der Rotor aus einem konzentrischen Ring oder Rohrstück, an dessen Außenumfang mindesten zwei, ein radiales Feld erzeugende Permanentmagnete angeordnet sind, so daß der innerhalb des Ringes oder Rohrstücks liegende Bereich für Beobachtungszwecke frei bleibt.

Soll im Reaktor eine Strömung in axialer Richtung erzeugt werden, so müssen die Rührschaufeln schräg zur Achse angestellt sein. Das magnetische Rührwerk ist dann selbstfördernd.

Gemäß einer Weiterentwicklung der Erfindung ist der Reaktor als Meßküvette für spektroskopische Untersuchungen ausgebildet und wird zu diesem Zweck von dem Meßlicht in axialer Richtung durchstrahlt.

Mit der Erfindung werden folgende Vorteile erzielt:
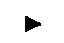 Durch das Rührwerk werden keine Toträume in den Reaktor eingebracht.
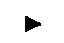 Die Rotorgestaltung in Form eines zur Behälterwand konzentrischen Ringes oder Rohrstücks ermöglicht eine freie Durchsicht bzw. Durchstrahlung des Reaktorinnenraums für Meß- und Beobachtungszwecke.
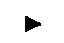 Insgesamt werden weniger Dichtungen benötigt, so daß es weniger Abdichtungsprobleme gibt.
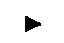 Aufgrund des einfachen und robusten Aufbaus kann der Zeitaufwand für die Montage, Demontage und Reinigung des Reaktors reduziert werden.
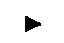 Aufgrund der relativ einfachen Geometrie der Reaktorzelle ist auch eine bessere Thermostatisierung möglich.

Im folgenden soll die Erfindung an Hand eines in den Zeichnungen dargestellten Ausführungsbeispieles näher erläutert werden. Es zeigen:
- Fig. 1: einen Querschnitt durch den Reaktor mit dem Rotor und den außerhalb angeordneten Magnetspulen (Elektromagneten)
- Fig. 2: einen Längsschnitt durch den Reaktor mit der Lagerung für den Rotor
- Fig. 3a - 3d: verschiedene Ausführungen für die Rührschaufeln am Rotor und
- Fig. 4a - 4b: weitere Ausführungen des Rotors mit unterschiedlicher Anordnung der Permanentmagnete

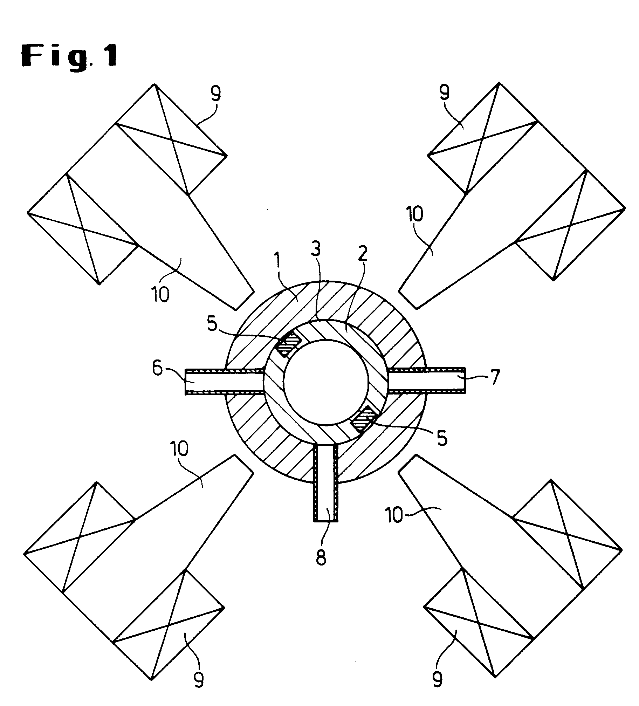

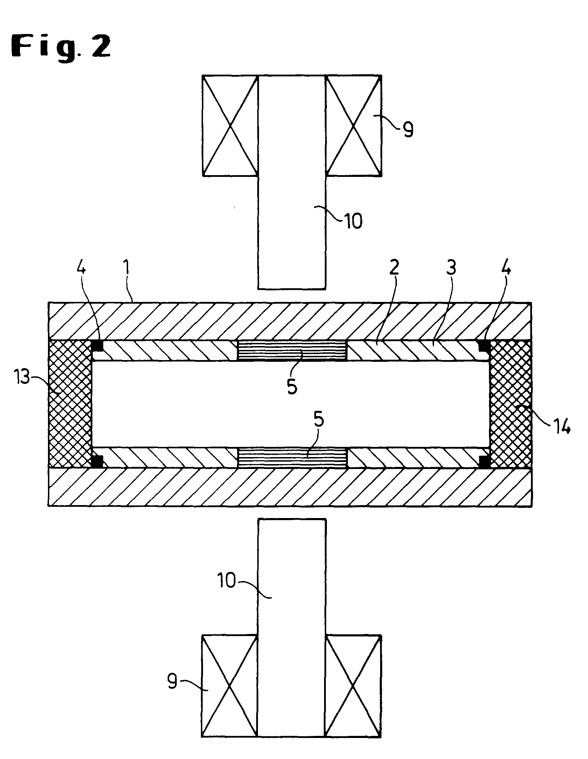

Der Reaktor gem. Fig. 1 und 2 besteht aus einem zylindrischen, druckfesten Behälter 1, in dem ein aus einem Ring oder Rohrstück 2 bestehender Rotor 3 konzentrisch zur Behälterwand drehbar gelagert ist. Zu diesem Zweck ist die Behälterinnenwand mit Lagerschalen 4 versehen (s. Fig. 2). Der Rotor 3 trägt mehrere, symmetrisch angeordnete Permanentmagnete 5, deren Polflächen nach innen und außen gerichtet sind. Die Behälterwand besteht aus einem unmagnetischen Material, z.B. aus Edelstahl V2A oder V4A, aus Hastelloy, Keramik oder Glas. Der Reaktor ist mit Anschlüssen 6 und 7 für die Zuführung von Reaktanden und mit einem weiteren Anschluß 8 zur Abführung bzw. Entleerung des Reaktionsprodukts versehen. Falls die Reaktion nur im Batch-Betrieb durchgeführt werden soll, genügen auch die Anschlüsse 6 und 7.

Mit Hilfe von sternförmig um den Behälter 1 herum angeordneten Magnetspulen 9 kann ein magnetisches Drehfeld erzeugt werden, das den Rotor 3 mit den Permanentmagneten 5 mitnimmt und dadurch in Drehung versetzt. Durch die Polschuhe 10 wird das Magnetfeld der Spulen 9 gebündelt und auf die Permanentmagnete 5 konzentriert. Die elektrischen Ströme zur phasenrichtigen Ansteuerung der Magnetspulen 9 werden durch eine bekannte Steuerschaltung (nicht dargestellt) erzeugt. Die Steuerschaltung kann den Rotor 3 in regelmäßige oder unregelmäßige Rotationen versetzen oder statisch in einer definierten Stellung halten.

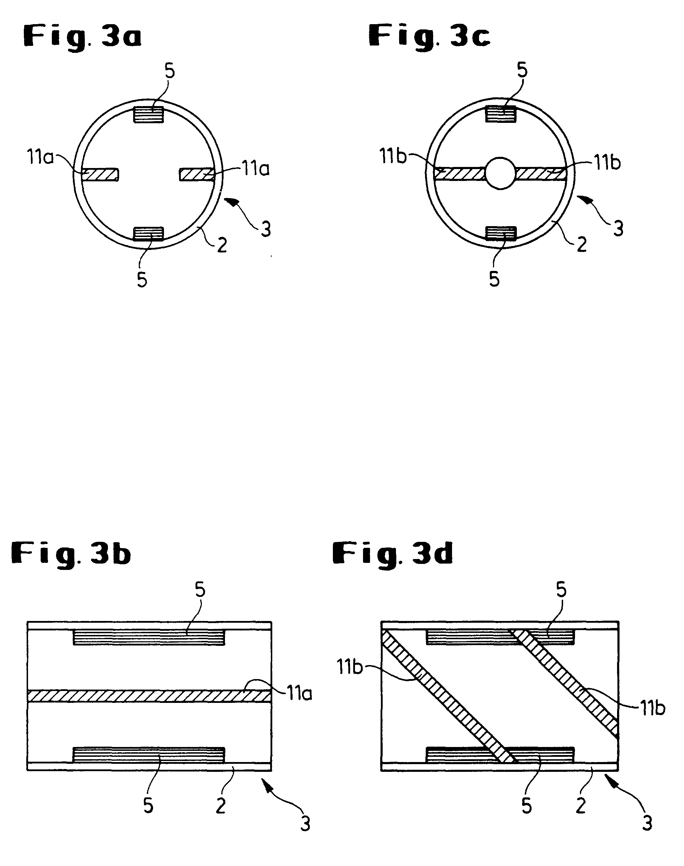

Der Rotor 3 ist, wie in Fig. 3a - 3d dargestellt, zur Durchmischung des Reaktorinhalts mit Rührschaufeln 11a, 11b bestückt. Die Figuren 3a und 3c zeigen dabei jeweils einen Querschnitt (senkrecht zur Achse) und die Figuren 3b und 3d einen Längsschnitt (parallel zur Achse) durch den Rotor. Gemäß Fig. 3a und Fig. 3b bestehen die Rührschaufeln 11a aus kurzen Stegen oder Paddeln, die sich in radialer Richtung von der Rotorinnenwand nach innen erstrecken und die Rührschaufeln 11b gemäß Fig. 3c und 3d aus schräg zur Achse angestellten, spiralförmig an der Rotorwand angeordneten Rührflächen. Bei der Drehung des Rotors führen die Rührflächen 11b eine Taumelbewegung aus. Dadurch wird neben der Durchmischung eine Förderung der Reaktionsmischung längs zur Achse erzielt. Das magnetische Rührwerk wirkt also bei dieser Ausführung gleichzeitig als Förderpumpe.

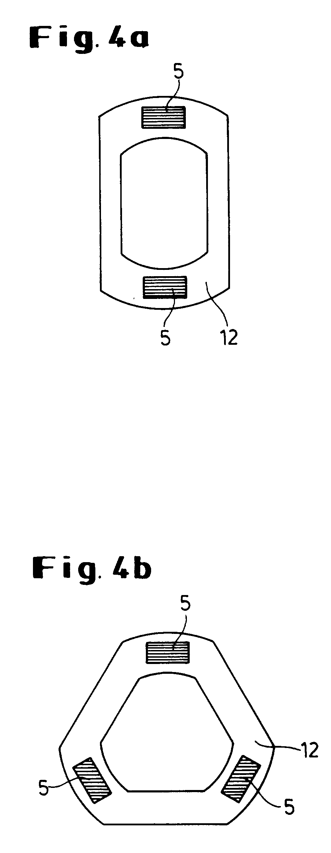

Gemäß den Fig. 4a und 4b sind die Rührschaufeln als sektorförmige Lamellen 12 ausgebildet, an deren äußeren Ende die Permanentmagneten 5 angebracht sind. Es können zwei (Fig. 4a), drei (Fig. 4b) oder mehr sternförmig angeordnete Rührlamellen 12 eingebaut werden.

Ein wichtiges Konstruktionsmerkmal des Reaktors besteht hier darin, daß der Innenraum des Reaktors in der Nähe der Achse frei von Einbauten bleibt, so daß der zentrale Reaktorraum für Beobachtungszwecke oder optische Messungen zugänglich ist. Aus diesem Grund ist der Reaktor an seinen Stirnseiten mit optischen Fenstern 13 und 14 versehen. Der Reaktor kann dann z.B. in Transmission als on-line Meßküvette in ein Spektrometer eingebaut werden, wodurch eine spektroskopische Untersuchung von laufenden chemischen Reaktionen ermöglicht wird.

## Patentansprüche

1. Reaktor für chemische Reaktionen, insbesondere bei Betriebsdrücken > 5 bar, bestehend aus einem zylindrischen Gefäß (1) mit einem Rührwerk, wobei das Rührwerk aus einem magnetischen Rührer (3, 5, 11a, 11b, 12) mit sternförmig außen um das zylindrische Gefäß (1) herum angeordneten, ein Drehfeld erzeugenden Magnetspulen (9) und einem im Bereich des Drehfeldes im Behälter (1) um die Zylinderachse drehbar gelagerten, mit Rührschaufeln (11a, 11b, 12) versehenen Rotor (3) besteht, **dadurch gekennzeichnet, dass** der Rotor (3) mit dem Drehfeld zusammenwirkende Permanentmagnete (5) trägt, wobei der Rotor (3) aus einem konzentrischen Ring oder Rohrstück (2) besteht, an dessen Außenumfang mindestens zwei ein radiales Feld erzeugende Permanentmagnete (5) angeordnet sind, so dass der innerhalb des Ringes oder Rohrstücks (2) liegende Bereich für Beobachtungszwecke frei bleibt.

2. Reaktor nach Anspruch 1, **dadurch gekennzeichnet, dass** die Rührschaufeln (11b) zur Erzeugung einer axialen Strömung schräg zur Achse angestellt sind.

3. Reaktor nach Anspruch 1 oder 2, **dadurch gekennzeichnet, dass** der Reaktor als Messküvette für spektroskopische Untersuchungen ausgebildet ist und von dem Messlicht in axialer Richtung durchstrahlt wird.

## Claims

1. Reactor for chemical reactions, in particular at operating pressures of >5 bar, comprising a cylindrical vessel (1) having a stirring device which consists of a magnetic stirrer (3, 5, 11a, 11b, 12) having magnetic coils (9) disposed around the outside of the cylindrical vessel (1) in a star-shaped manner and which produce a rotating field and having a rotor (3) which is mounted in the region of the rotating field in the vessel (1) such that it can rotate about the cylinder axis and which is provided with stirring blades (11a, 11b, 12), **characterized in that** the rotor (3) bears permanent magnets (5) which co-operate with the rotating field and consists of a concentric ring or tubular piece (2) at the outer circumference of which there are disposed at least two permanent magnets (5) which produce a radial field, so that the region lying within the ring or tubular piece (2) remains free for observation purposes.

2. Reactor according to Claim 1, **characterized in that** the stirring blades (11b) are positioned at a slant to the axis to produce an axial flow.

3. Reactor according to Claim 1 or 2, **characterized in that** the reactor is constructed as a measuring cell for spectroscopic analysis and measuring light is transmitted through the reactor in the axial direction.

## Revendications

1. Réacteur pour réactions chimiques, en particulier à des pressions de fonctionnement > 5 bar, consistant en un récipient cylindrique (1) avec un agitateur, où l'agitateur consiste en un agitateur magnétique (3, 5, 11a, 11b, 12) avec bobines d'électroaimant (9) produisant un champ tournant, disposées en étoile, à l'extérieur et autour du récipient cylindrique (1) et un rotor (3) muni de palles d'agitation (11a, 11b, 12), disposé dans la zone du champ tournant, dans le récipient (1) de manière à tourner autour de l'axe du cylindre, **caractérisé en ce que** le rotor (3) porte des aimants permanents (5) agissant simultanément avec le champ tournant, le rotor (3) consistant en un anneau ou pièce tubulaire (2) concentrique sur le périmètre extérieur de laquelle sont disposés au moins deux aimants permanents (5) produisant un champ radial, de sorte que la zone située à l'intérieur de l'anneau ou de la pièce tubulaire (2) soit libre à des fins d'observation.

2. Réacteur suivant la revendication 1, **caractérisé en ce que** les pales (11b) sont disposées en oblique par rapport à l'axe pour produire un écoulement axial.

3. Réacteur suivant la revendication 1 ou 2, **caractérisé en ce que** le réacteur est formé comme une cuvette de mesure pour examens spectroscopiques et est traversé par la lumière de mesure dans la direction axiale.
